# EUROPÄISCHE PATENTSCHRIFT

(11) **EP 2 603 567 B1**
(45) Veröffentlichungstag und Bekanntmachung des Hinweises auf die Patenterteilung: **08.10.2014**
(21) Anmeldenummer: 11745742.4
(22) Anmeldetag: 01.08.2011
(51) Int. Cl.: C09J 7/00

(54) **VERFAHREN ZUR HERSTELLUNG EINES KLEBEBANDS MIT ÜBERSTEHENDEM LINER**
METHOD FOR PRODUCING AN ADHESIVE TAPE HAVING A PROTRUDING LINER
PROCÉDÉ POUR PRODUIRE UN RUBAN ADHÉSIF COMPORTANT UN MATÉRIAU DE SÉPARATION SAILLANT

(30) Priorität: 13.08.2010 DE 102010039299; 28.04.2011 DE 102011017689
(43) Veröffentlichungstag der Anmeldung: 19.06.2013
(73) Patentinhaber: Tesa SE, 20253 Hamburg (DE)
(72) Erfinder: TACH, Michael, 22549 Hamburg (DE); EHLERS, Bruce, Dirk, 22547 Hamburg (DE); GABRIEL, Markus, 22459 Hamburg (DE); FRÖHLICH, Christian, 24558 Henstedt-Ulzburg (DE)
(86) Internationale Anmeldenummer: PCT/EP2011/063226
(87) Internationale Veröffentlichungsnummer: WO 2012/019938

(56) Entgegenhaltungen:
- EP-A1- 0 928 822
- US-A- 4 418 105
- US-A1- 2003 113 500

## Beschreibung

Die Erfindung betrifft ein Verfahren zur Herstellung eines Klebebands mit überstehendem Liner.

Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die (Haft)klebemassen miteinander in Kontakt kommen, oder um bei einseitig klebenden Klebebändern eine Verklebung der (Haft)Klebemasse auf dem Träger zu verhindern, werden die Klebebänder vor dem Wickeln auf ein Abdeckmaterial (auch als Trennmaterial bezeichnet) aufgebracht, das zusammen mit dem Klebeband aufgewickelt wird. Dem Fachmann sind derartige Abdeckmaterialien unter den Namen Releaseliner oder Liner bekannt. Neben der Abdeckung von ein- oder doppelseitig klebenden Klebebändern werden Liner auch zur Eindeckung von Etiketten eingesetzt.

Ein Liner (Trennpapier, Trennfolie) ist nicht Bestandteil eines Klebebandes oder Etiketts, sondern nur ein Hilfsmittel zu deren Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Wird ein doppelseitig klebendes, mit einem Liner ausgerüstetes Klebeband abgerollt, wird es normalerweise mit der offenen, also linerfreien Haftklebemassenseite auf einen Untergrund aufgeklebt. Die andere Haftklebemassenseite haftet währenddessen auf der beschichteten Oberfläche des Liners noch in genügendem Maße, um die Handhabung des Klebebands zu ermöglichen.

Der Liner ist vom Klebeband abziehbar, wobei durch den Liner selbst oder durch das Abziehen des Liners die Klebkraft der Klebemasse nicht wesentlich für die spätere Verwendung beeinträchtigt werden sollte.

Bei der Herstellung von Linern werden die Träger auf Papier- oder Folienbasis üblicherweise mit einer abhäsiven Beschichtung (Release- oder Trennbeschichtung) ausgerüstet, um die Adhäsionsneigung der Klebemasse gegenüber diesen Oberflächen zu verringern. Die Ausrüstung erfolgt dabei bevorzugt beidseitig.
Als Release- oder Trennbeschichtung werden häufig vernetzbare Silikonsysteme eingesetzt. Dazu zählen Mischungen aus Vernetzungskatalysatoren und so genannten thermisch härtbaren kondensations- oder additionsvernetzenden Polysiloxanen. Für kondensationsvernetzende Silikonsysteme sind als Vernetzungskatalysatoren häufig Zinnverbindungen wie Dibutlyzindiacetat in der Masse zugegen.

Im Folgenden werden das Abdeckmaterial oder das Trennmaterial einheitlich als Liner bezeichnet.

Ein Problem bei vielen Linern besteht darin, dass sich diese von der mit ihnen eingedeckten Klebemasse nur schwer lösen lassen. Dies Problem tritt insbesondere dann in Erscheinung, wenn die Breite des Liners der Breite der eingedeckten Klebemasse entspricht, so dass der Liner nicht übersteht. Dann kann es sich als schwierig erweisen, zum Ablösen wenigstens ein Stück des Liners zu ergreifen. Insbesondere bei der maschinellen Weiterverarbeitung der eingedeckten Klebebänder kann es zwingend erforderlich sein, dass sich ein Liner problemlos ausdecken lässt.

Zur Erleichterung der Handhabung derartiger Klebemasse/Liner-Kombination werden Liner aufgebracht, die eine größere Breite als die einzudeckende Klebemasse haben. Es ergibt sich ein überstehender Liner, der ein besseres Ablösen des Liners von der Klebemasse ermöglicht, weil der überstehende Bereich des Liners als Anfasserlasche dient.

Gleichzeitig wird ein anderes Problem vieler Klebebandrollen gelöst, nämlich die Seitenkantenklebrigkeit. Wenn Klebebandrollen mit ihrer flachen Seiten auf einen Untergrund gelegt werden, kann es vorkommen, dass die Rolle aufgrund des Kontakts zwischen Klebemasse und Untergrund mit dem Untergrund verklebt. Diese Seitenkantenklebrigkeit kann besonders bei dicken oder bei sehr klebrigen Klebmasseschichten darüber hinaus dazu führen, dass die Wickellagen der Klebebandrolle miteinander verkleben und sich das Klebeband damit nicht mehr von der Rolle abwickeln lässt. Eine starke Seitenkantenklebrigkeit kann auch den Transport und die Lagerung der Klebebandrolle behindern, wenn die Rolle auf der Seitenfläche liegend ohne eine antiadhäsive Zwischenlegscheibe transportiert oder gelagert wird.
Ein überstehender Liner löst die geschilderten Nachteile. Er verhindert einen Kontakt zwischen zwei benachbarten Klebeschichten und sorgt für einen räumlichen Abstand zwischen Kleberollenseite und Untergrund. Auch die Zwischenlegscheibe wird somit überflüssig.

Einseitig klebrige Klebebänder bestehen üblicherweise aus einem Trägermaterial, auf das einseitig eine Klebemasse aufgebracht ist. Die freie Seite der Klebemasse kann dann zusätzlich mit einem Liner eingedeckt sein.

Doppelseitig klebrige Klebebänder, auch beidseitig klebrige genannt, weisen zumeist einen Träger auf, der auf beiden Seiten mit einer Klebemassenbeschichtung ausgerüstet ist. Die beiden Klebemassen können identisch sein, sie können aber auch unterschiedlich ausgeführt werden. Zumindest eine der beiden Klebemassenschichten ist mit einem Liner eingedeckt, um in der Klebebandrolle einen direkten Kontakt zwischen den beiden Klebemassenschichten zu verhindern. Daneben kann auch die zweie Klebemasse mit einem zweiten Liner eingedeckt sein.
Doppelseitig klebrige Klebebänder müssen nicht zwingend einen Träger haben. Auch eine reine Klebemassenschicht oder zwei oder mehr aufeinander laminierte Klebemassenschichtern werden als doppelseitig klebrige Klebebänder bezeichnet.

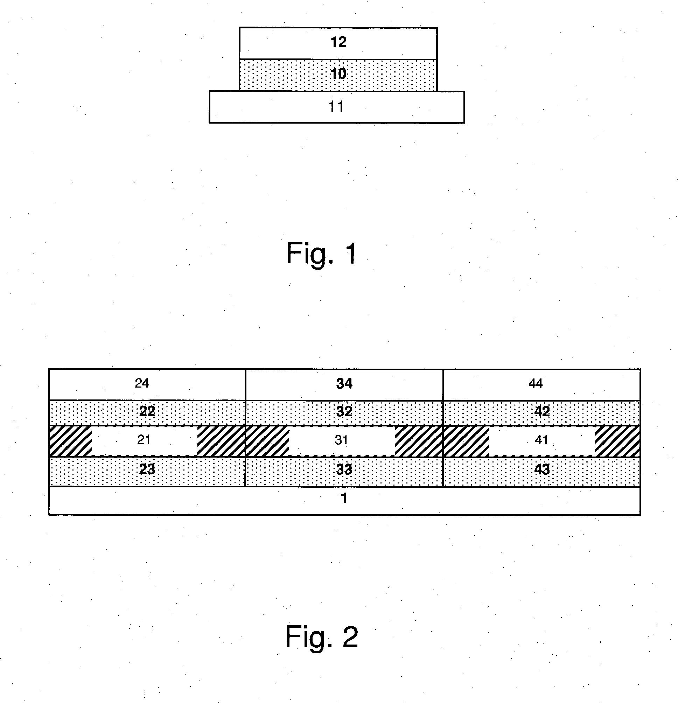

In der Figur 1 ist ein doppelseitig klebendes Klebeband dargestellt, wobei das Klebeband aus einer reinen Klebemassenschicht 10 besteht. Die untere Seite der Klebemassenschicht ist mit einem ersten Liner 11 eingedeckt, der beide Kanten der Klebemasse 10 überragt. Die obere Seite der Klebemasse ist mit einem zweiten Liner 12 ausgerüstet, dessen Breite identisch ist mit der Breite der Klebemasse 10.

Ein Nachteil von Klebebändern mit überstehendem Liner ist die aufwändige Fertigung.

Klebebänder werden hergestellt, indem üblicherweise eine breite Rolle Trägermaterial abgerollt wird und anschließend mit einer Klebemasse ausgerüstet wird. Diese Klebemasse kann anschließend mit einem Liner eingedeckt werden. Nach eventuellen weiteren Verarbeitungsschritten wie zum Beispiel Trocknen wird das mit Klebemasse ausgerüstete Trägermaterial, Klebebandbahn genannt, samt Liner zu einer so genannten Mutterrolle aufgewickelt. Zum Schneiden wird die Mutterrolle abgewickelt und die mit einem Liner eingedeckte Klebebandbahn einer entsprechenden Schneidvorrichtung zugeführt, in der die Klebebandbahn in einzelne Klebebänder aufgeschnitten wird. Das Schneiden kann auch direkt nach der Fertigung erfolgen, also ohne dass die Klebebandbahn samt Liner auf- und wieder abgewickelt wird.
Daneben werden Klebebänder dadurch hergestellt, dass aus einer Jumbo- oder Mutterrolle direkt Klebebandrollen abgestochen werden.
Weiterhin ist es möglich, dass die Klebebandbahn ohne Liner geschnitten wird und der Liner nach dem Schnittvorgang in der entsprechenden Breite auf die offene Klebemassenseite aufgebracht wird.
Wenn das Klebeband aus einer reinen Klebemassenschicht (ein so genanntes Transferklebeband) besteht, also trägerfrei ist, wird diese üblicherweise direkt auf einen Liner aufgebracht. In diesem Fall wird die nichtgeschnittene Klebemassenschicht als Klebebandbahn bezeichnet.

Der Beschichtungs- und Trocknungsprozess kann nach bekannten Verfahren erfolgen. Eine Übersicht über übliche Herstellungsverfahren findet sich beispielsweise in "Coating Equipment", Donatas Satas in Handbook of Pressure Sensitive Adhesive Technology, second edition, edited by Donatas Satas, Van Nostrand Reinhold New York, Seiten 767 bis 808.

Das Aufbringen des Liners nach dem Schneiden der Klebebandrollen ist verfahrenstechnisch aufwändig, weil eine Vielzahl von vergleichsweise schmalen Klebebändern sehr präzise mit zwar eine größere Breite als die Klebebänder aufweisende, aber dennoch schmale Liner eindeckt werden muss.
Für jedes Klebeband muss eine separate Rollenabwicklung für den überstehenden Liner installiert werden. Des Weiteren sind jeweils eine Bahnführung und eine Laminierungsstation für jedes einzelne Klebeband vorzusehen. Die überstehenden Liner müssen separat auf die richtige Breite geschnitten und gewickelt zur Verfügung stehen. Alternativ kann beim Schneiden der mit einem Liner ausgerüsteten Klebebandbahn im Kantenbereich jedes einzelnen Klebebands ein zusätzlicher schmaler Streifen abgetrennt werden, ohne dass der darunter befindliche Liner an dieser Stelle durchtrennt wird. Der schmale Streifen wird dann vor dem Aufrollen des Klebebands entfernt, so dass ein klebemassefreier Bereich an einem Rand des Klebebands erzeugt wird. Das Schneiden und Entfernen von schmalen Streifen ist auch an beiden Kanten des Klebebands möglich, so dass der Liner an beiden Rändern des Klebebands übersteht. Dieses Verfahren hat den Nachteil, dass das Klebeband schmaler wird und damit ein Materialverlust verbunden ist.

Aufgabe der Erfindung ist es, die Nachteile nach dem Stand der Technik zu beseitigen. Es soll insbesondere ein Verfahren zur Herstellung eines Klebebands mit überstehendem Liner angegeben werden, das verfahrenstechnisch einfach gestaltet ist und das so gefahren werden kann, dass es zu keinen Verlusten an Klebeband führt.

Gelöst wird diese Aufgabe durch ein Verfahren, wie es im Hauptanspruch niedergelegt ist. Vorteilhafte Ausführungsformen des Verfahrens sind Gegenstand der Unteransprüche.

Demgemäß betrifft die Erfindung ein Verfahren zur Herstellung von zumindest einseitig klebenden Klebebändern, wobei
- eine Klebebandbahn, bei der die zumindest eine klebende Seite mit einem ersten Liner eingedeckt ist, in eine Schneidvorrichtung geführt wird, in der in Maschinenrichtung aus der Klebebandbahn insgesamt N einzelne, nebeneinanderliegende Klebebandstreifen insbesondere verlustfrei erzeugt werden, ohne dass der erste Liner verletzt wird,
- jeder zweite Klebebandstreifen vom ersten Liner entfernt wird und auf einen zweiten Liner mit jeweils einem Abstand zwischen den einzelnen Klebebandstreifen kaschiert wird,
- der erste Liner und der zweite Liner jeweils zwischen den auf dem ersten und auf dem zweiten Liner befindlichen Klebebandstreifen durchschnitten werden,
- die einzelnen Klebebänder mit dem Linerstreifen zu insgesamt N Rollen in Form einer archimedischen Spirale aufgewickelt werden.

Unter der Verletzung des Liners ist zu verstehen, dass die üblicherweise auf dem Liner vorgesehene Releasebeschichtung durchschnitten ist oder der Liner durch den Schneidvorgang so stark geschwächt ist, dass die mechanische Stabilität stark eingeschränkt ist, so dass der Liner an dieser Stelle durchtrennt werden kann.
Ein Beschädigen der Oberfläche der Releasebeschichtung durch einen Schnitt oder ein Eindrücken der Oberfläche durch das Schneidwerkzeug zählt nicht zu einer Verletzung, sofern der Liner in seiner Funktionalität nicht verändert wird.

Die Klebebandbahn kann eine reine Klebemassenschicht (die ihrerseits aus einer, zwei oder mehreren Klebemassenschichten bestehen kann), ein mit einer Klebemasse einseitig ausgerüstetes Trägermaterial oder ein beidseitig mit einer Klebemasse ausgerüstetes Trägermaterial sein, wobei bei Letzterem die zweite Klebemasse zusätzlich mit einem weiteren Liner eingedeckt sein kann.

Als bandförmiges Trägermaterial können beispielweise Vliese, Papiere, orientierte PP-, HDPE-, LDPE-, PVC- und PET-Folien sowie Schäume (zum Beispiel PE-Schäume oder PVA-Schäume) und Gewebe verwendet werden, wobei diese Aufzählung nicht abschließend ist.

Als Liner werden vorzugsweise einseitig oder beidseitig antihaftbeschichtete Trägermaterialien wie beispielsweise Papier, insbesondere beschichtetes Papier wie PE-Papier, orientierte PP-, HDPE-, LDPE-, PVC-, MOPP-, BOPP-, PEN-, PMP-, PA-und/oder PET-Folien eingesetzt. Besonders bevorzugt sind silikonbeschichtete Liner sowie Liner, die silikonfreie Trennschichten wie zum Beispiel Paraffin, Teflon oder Wachse aufweisen. Auch sind Verbundmaterialien wie beispielsweise PET/Aluminium-Folie als Liner verwendbar.

Als Klebemasse können alle bekannten Klebemassen wie Klebemassen auf Basis von lösemittelhaltigen Naturkautschuk- und Acrylatklebemassen oder lösungsmittelfreie Klebemassen verwendet werden.

Unter dem Begriff "Schneiden" werden auch Stanzverfahren subsummiert. Die Begriffe "Laminieren" und "Kaschieren" werden synonym verwendet, sofern nicht anderes angegeben. Die Begriffe "Delaminieren" und "Dekaschieren" werden synonym verwendet, sofern nicht anderes angegeben ist.

Vorzugsweise wird das Verfahren kontinuierlich durchgeführt.

Anhand der im Folgenden ausführlicher beschriebenen Figuren werden vorteilhafte Ausführungsformen des Verfahrens dargestellt, ohne dass diese oder die Figuren selbst als einschränkend zu verstehen sind.

In der Figur 2 ist ein mögliches Ausgangsmaterial gezeigt, das mit dem erfindungsgemäßen Verfahren verarbeitet werden soll beziehungsweise bei dem der erste Verfahrensschritt bereits durchgeführt worden ist. Üblicherweise werden aus einer Klebebandbahn sehr viele einzelne Streifen Klebeband geschnitten. In Figur 2 sind nur drei einzelne, nebeneinanderliegende Klebebandstreifen 2, 3, 4 davon dargestellt, die in einer Schneidvorrichtung aus einer Klebebandbahn in Maschinenrichtung verlustfrei geschnitten worden sind. Die Klebebandbahn und somit die Klebebandstreifen 2, 3, 4 befinden sich auf einem ersten Liner 1, der beim Schneidvorgang der Klebebandstreifen 2, 3, 4 nicht verletzt worden ist.

Die einzelnen Klebebandstreifen bestehen aus einem beidseitig mit einer Klebemasse 22, 32, 42, 23, 33, 43 ausgerüsteten Trägermaterial 21, 31, 41, wobei die obere Klebemassenschicht 23, 33, 43 mit einem weiteren Liner eingedeckt war, der im Schneidprozeß ebenfalls durchtrennt worden ist, so dass jeweils ein Linerabschnitt 24, 34, 44 die obere Klebemassenschicht 23, 33, 43 vollflächig abdeckt.

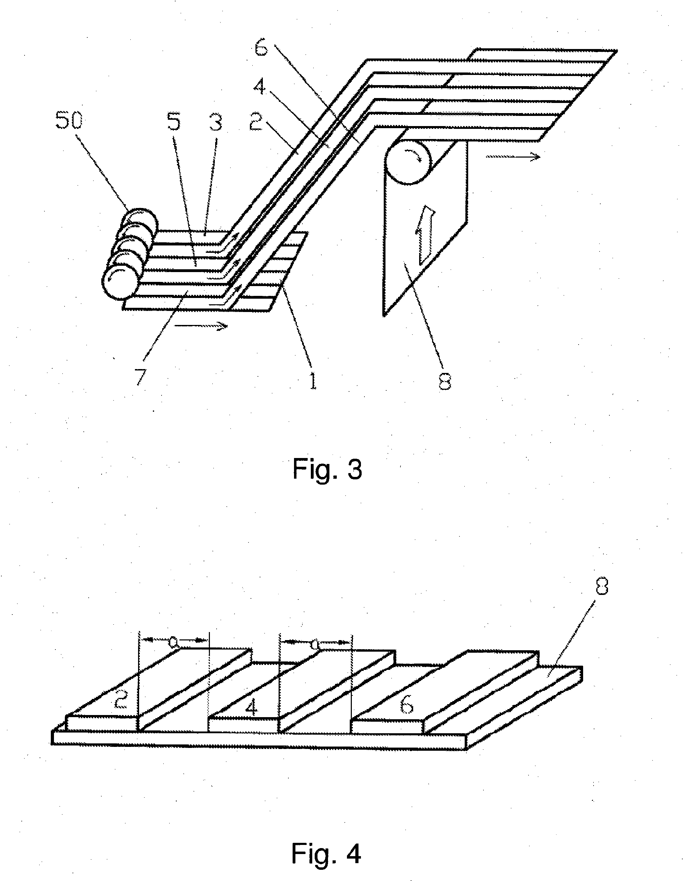

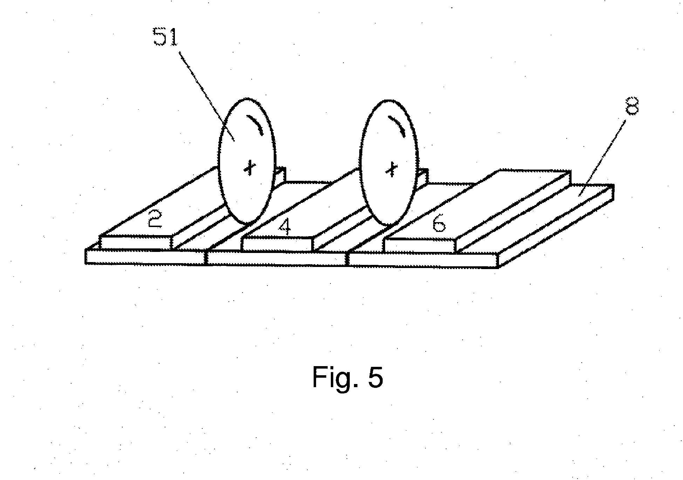

In der Figur 3 ist eine Klebebandbahn dargestellt, bei der sechs Klebebandstreifen 2, 3, 4, 5, 6, 7 in einer Schneidvorrichtung 50 erzeugt worden sind.
Nach dem Schneiden wird jeder zweite Klebebandstreifen 2, 4, 6 vom ersten Liner 1 entfernt und auf einen zweiten Liner 8 aufkaschiert, wobei die Abstände zwischen den Klebebandstreifen 2, 4, 6 unverändert bleiben.
Die übrigen Klebebandstreifen 1, 3, 5 verbleiben auf dem ersten Liner 1.

Selbstverständlich können auch die Klebebandstreifen 3, 5, 7 vom ersten Liner 1 entfernt und auf den zweiten Liner 8 aufkaschiert werden, während die Klebebandstreifen 2, 4, 6 auf dem ersten Liner 1 verbleiben.

Die Liner 1, 8 samt der darauf befindlichen Klebestreifen 2, 3, 4, 5, 6, 7 können in einem weiteren Verfahrensschritt zunächst zu Rollen aufgewickelt werden. Diese Rollen würden dann vor der Weiterverarbeitung wieder abgerollt werden.

Die Liner 1, 8 können auch direkt einer weiteren Schneidvorrichtung zugeführt werden.
In dieser Schneidvorrichtung werden der erste Liner 1 und der zweite Liner 8 jeweils zwischen den auf dem ersten 1 und auf dem zweiten Liner 8 befindlichen Klebebandstreifen 2, 3, 4, 5, 6, 7 durchschnitten.

Vorzugsweise erfolgt der Schnitt durch die Liner 1, 8 derart, dass der Abstand a zwischen den Klebebandstreifen 2, 3, 4, 5, 6, 7 jeweils genau halbiert wird.

In einer weiteren Ausführungsform der Erfindung erfolgt der Schnitt durch die Liner 1, 8 derart, dass die Liner jeweils direkt an einer Seitenkante der Klebebänder 2, 3, 4, 5, 6, 7 durchtrennt werden. Auf diese Weise ergibt sich, dass der Liner an einer Kante des Klebebands übersteht (damit also breiter ist).

Selbstverständlich sind Mischformen der beiden Varianten möglich.

Überhaupt ist der Schnitt durch die Liner gezielt einstellbar, so dass der Überstand des Liners an beiden Kanten des Klebebands wie gewünscht eingestellt werden kann.

Wenn zusätzlich der erste Liner 1 eine größere Breite aufweist als die Klebebandbahn, so dass der erste Liner 1 auf beiden Seiten der Klebebandbahn übersteht, und wenn die Klebebandstreifen 2, 4, 6 so auf dem zweiten Liner 8 kaschiert werden, dass die beiden äußeren Klebebandstreifen 2, 6 nicht direkt auf der Linerkante aufliegen, sondern der Liner 8 auch jeweils an der äußeren Kante der Klebebandstreifen 2, 6 übersteht, ergeben sich beim Schneiden Klebebandstreifen 2, 3, 4, 5, 6, 7, bei denen der Liner zu beiden Seiten übersteht, so dass diese Überstände hervorragend gegriffen werden können und dieser Liner völlig problemlos von der darunter befindlichen Klebemasse entfernt werden kann.

In der Figur 4 ist der zweite Liner 8 gezeigt, auf den die drei Klebebandstreifen 2, 4, 6 kaschiert sind. In der Schneidvorrichtung 51 wird dieser Liner durchschnitten, so dass drei einzelne Klebebänder entstehen.

Der Schneidvorgang ist insbesondere ein Längsschneidverfahren im Klingen-, Quetschmesser- oder Scherenschnittverfahren mittig im klebmassefreien Bereich geschnitten. Es entstehen einzelne Klebebandstreifen.

Abschließend werden die einzelnen Klebebänder mit dem Linerstreifen zu insgesamt sechs Rollen in Form einer archimedischen Spirale aufgewickelt, wobei jedes Klebeband für sich ein überstehendes Abdeckpapier aufweist.

Ein großer Vorteil des erfindungsgemäßen Verfahrens ist, dass das Verfahren ohne jeglichen Verlust von Klebebandabschnitten gefahren werden kann.
Dennoch liegt es im Rahmen der Erfindung, wenn dieser Vorteil nicht genutzt wird und beispielsweise zusätzlich ein schmaler Streifen aus den Klebebändern abgetrennt wird, der vor dem Aufrollen des Klebebands entfernt wird.

## Patentansprüche

1. Verfahren zur Herstellung von zumindest einseitig klebenden Klebebändern, wobei eine Klebebandbahn, bei der die zumindest eine klebende Seite mit einem ersten Liner 1 eingedeckt ist, in eine Schneidvorrichtung geführt wird, in der in Maschinenrichtung aus der Klebebandbahn insgesamt N einzelne, nebeneinanderliegende Klebebandstreifen 2, 3, 4, 5, 6, 7 insbesondere verlustfrei erzeugt werden, ohne dass der erste Liner 1 verletzt wird,
jeder zweite Klebebandstreifen 2, 4, 6 oder 3, 5, 7 vom ersten Liner 1 entfernt wird und auf einen zweiten Liner 8 mit jeweils einem Abstand a zwischen den einzelnen Klebebandstreifen 2, 4, 6 oder 3, 5, 7 aufgebracht wird,
der erste Liner 1 und der zweite Liner 8 jeweils zwischen den auf dem ersten 1 und auf dem zweiten Liner 8 befindlichen Klebebandstreifen 2, 4, 6 oder 3, 5, 7 durchschnitten werden,
die einzelnen Klebebänder 2, 3, 4, 5, 6, 7 mit dem Linerstreifen zu insgesamt N Rollen in Form einer archimedischen Spirale aufgewickelt werden.

2. Verfahren nach Anspruch 1,
**dadurch gekennzeichnet, dass**
der Schnitt durch die Liner derart erfolgt, dass der Abstand a zwischen den Klebebandstreifen 2, 4, 6 und/oder Klebebandstreifen 3, 5, 7 jeweils genau halbiert wird.

3. Verfahren nach Anspruch 1,
**dadurch gekennzeichnet, dass**
die Liner jeweils direkt an einer Seitenkante der Klebebandstreifen 2, 4, 6 und/oder Klebebandstreifen 3, 5, 7 durchtrennt werden.

4. Verfahren nach mindestens einem der vorherigen Ansprüche,
**dadurch gekennzeichnet, dass**
die Klebebandbahn eine reine Klebemassenschicht (die ihrerseits aus einer, zwei oder mehreren Klebemassenschichten bestehen kann), ein mit einer Klebemasse einseitig ausgerüstetes Trägermaterial oder ein beidseitig mit einer Klebemasse ausgerüstetes Trägermaterial ist.

5. Verfahren nach mindestens einem der vorherigen Ansprüche,
**dadurch gekennzeichnet, dass**
das Verfahren kontinuierlich durchgeführt wird.

## Claims

1. Process for producing adhesive tapes that are adhesive on at least one side, where an adhesive tape web in which a first liner 1 protectively covers the at least one adhesive side is conducted into a cutting apparatus in which, in machine direction, a total of N individual adhesive tape strips 2, 3, 4, 5, 6, 7 situated alongside one another are produced from the adhesive tape web in particular without loss, without damage to the first liner 1,
each second adhesive tape strip 2, 4, 6 or 3, 5, 7 is removed from the first liner 1 and is applied to a second liner 8 with in each case a distance a between the individual adhesive tape strips 2, 4, 6 or 3, 5, 7,
in each case a cut is made through the first liner 1 and the second liner 8, between the adhesive tape strips 2, 4, 6 or 3, 5, 7 located on the first liner 1 and on the second liner 8,
the individual adhesive tapes 2, 3, 4, 5, 6, 7 are wound up with the liner strip to give a total of N rolls in the form of an Archimedean spiral.

2. Process according to Claim 1,
**characterized in that**
the cut through the liners is made in such a way that the distance a between the adhesive tape strips 2, 4, 6 and/or adhesive tape strips 3, 5, 7 is in each case precisely bisected.

3. Process according to Claim 1,
**characterized in that**
in each case the liners are separated directly at a lateral edge of the adhesive tape strips 2, 4, 6 and/or adhesive tape strips 3, 5, 7.

4. Process according to at least one of the preceding claims,
**characterized in that**
the adhesive tape web is an adhesive mass layer without any other components (where said layer can in turn be composed of one, two, or more adhesive mass layers), a backing material equipped on one side with an adhesive mass, or a backing material equipped on both sides with an adhesive mass.

5. Process according to at least one of the preceding claims,
**characterized in that**
the process is carried out continuously.

## Revendications

1. Procédé pour la fabrication de bandes adhésives au moins monofaces, un ruban de bande adhésive, sur lequel ladite au moins une face adhésive est recouverte par un premier antiadhésif 1, étant guidé dans un dispositif de découpe dans lequel on génère, dans le sens machine, à partir du ruban de bande adhésive, au total N bandelettes de bande adhésive individuelles, adjacentes 2, 3, 4, 5, 6, 7, en particulier sans perte, sans que l'antiadhésif 1 ne soit endommagé, chaque deuxième bandelette de bande adhésive 2, 4, 6 ou 3, 5, 7 étant enlevée du premier antiadhésif 1 et appliquée sur un deuxième antiadhésif 8 à chaque fois à une distance a entre les bandelettes de bande adhésive individuelles 2, 4, 6 ou 3, 5, 7, le premier antiadhésif 1 et le deuxième antiadhésif 8 étant découpés à chaque fois entre les bandelettes de bande adhésive 2, 4, 6 ou 3, 5, 7 se trouvant sur le premier antiadhésif 1 et le deuxième antiadhésif 8, les bandes adhésives individuelles 2, 3, 4, 5, 6, 7 étant enroulées avec la bandelette antiadhésive en au total N rouleaux sous forme d'une spirale d'Archimède.

2. Procédé selon la revendication 1, **caractérisé en ce que** la découpe des antiadhésifs est réalisée de manière telle que la distance a entre les bandelettes de bande adhésive 2, 4, 6 et/ou les bandelettes de bande adhésive 3, 5, 7 est à chaque fois divisée exactement par deux.

3. Procédé selon la revendication 1, **caractérisé en ce que** les antiadhésifs sont coupés directement sur un bord latéral des bandelettes de bande adhésive 2, 4, 6 et/ou des bandelettes de bande adhésive 3, 5, 7.

4. Procédé selon au moins l'une quelconque des revendications précédentes, **caractérisé en ce que** le ruban de bande adhésive est une couche de masse adhésive pure (qui peut à son tour être constituée par une, deux ou plus de deux couches de masse adhésive), un matériau support apprêté sur une face par une masse adhésive ou un matériau support apprêté sur les deux faces d'une masse adhésive.

5. Procédé selon au moins l'une quelconque des revendications précédentes, **caractérisé en ce que** le procédé est réalisé en continu.
